# EUROPEAN PATENT APPLICATION

(11) **EP 2 679 351 A1**
(43) Date of publication of application: **01.01.2014**
(21) Application number: 13183473.1
(22) Date of filing: 26.06.2003
(51) Int. Cl.: B25J 17/02, B25J 19/00

(54) **Robot wrist**

(62) Divisional of application: 03076990.5
(71) Applicant: ABB AS, 1396 Billingstad (NO)
(72) Inventor: Krogedal, Arnulf, 4322 Sandnes (NO)
(74) Representative: Savela, Reino Aleksi

(57) **Abstract**

A robot wrist comprises a first wrist part (1) configured to be mounted to a robot arm, a second wrist part (2) rotatable in relation to the first wrist part (1) about a first axis of rotation (A₁), a third wrist part (3) rotatable in relation to the second wrist part (2) about a second axis of rotation (A₂), and a protection hose (4) extending through the robot wrist. The first axis of rotation (A₁) intersects with the second axis of rotation (A₂) within a boundary wall of the protection hose (4) in at least one position of the robot wrist. Intersection of the first and the second axes of rotation (A₁, A₂) within the boundary wall of the protection hose (4) is achieved by making the second wrist part (2) compact in the longitudinal direction of the protection hose (4), and wide in the radial direction of the same. As a result the protection hose (4) is arranged in a single circular arc in a bent position of the robot wrist, which in its turn results in an improved service life of the protection hose (4).

## Description

### TECHNICAL FIELD

The invention relates to a robot wrist comprising a protection hose extending through it.

### BACKGROUND ART

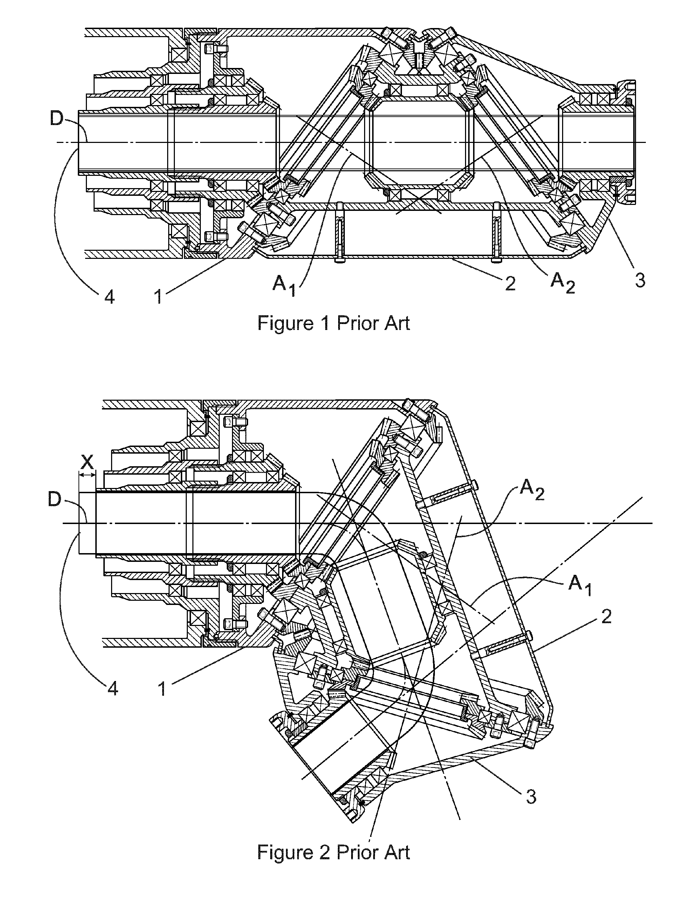

US 4,690,012 describes a robot wrist comprising three independently rotatable wrist parts forming a hollow structure. Figure 1 (Prior Art) shows the robot wrist of US 4,690,012 containing a protection hose 4 through which cables, wires, tubes or smaller hoses (not shown) are arranged for supplying electric power, compressed air or hydraulic fluid to one or more tools operated by the robot. In figure 1 the protection hose 4 is arranged in a straight position about a nominal centre line D. The figure 1 further shows first, second and third wrist parts 1, 2, 3. An axis of rotation between the first and second wrist parts 1, 2 is indicated as A₁, and an axis of rotation between the second and third wrist parts 2, 3 is indicated as A₂.

Figure 2 shows the same robot wrist arranged in a bent position. The geometry of the hollow structure in the Prior Art wrist design does not allow a free bending of the protection hose 4 which thereby imposes a limit on its service life. It may be said that the protection hose 4 bends in two places while passing through the inside of the wrist in the bent position. The protection hose 4 is also significantly extended in length when moving from a straight to bent configuration as indicated by the distance X in the drawing.

The robot wrist described above has a high degree of orientation, can access places inside hollow sections, box sections and has performed well in service. However, the protection hose 4 inside the robot wrist containing the cables and other hoses tends to become worn in service due to the repeated flexing of the wrist parts, and such protection hoses 4 require more frequent periodic maintenance or repair than would otherwise be desirable.

### SUMMARY OF THE INVENTION

One object of the invention is to provide a robot wrist with an improved service life.

This object is achieved by the device according to the appended claim 1.

According to a first aspect of the invention, there is provided a robot wrist comprising: a first wrist part configured to be mounted to a robot arm, a second wrist part rotatable in relation to the first wrist part about a first axis of rotation, a third wrist part rotatable in relation to the second wrist part about a second axis of rotation, and a protection hose extending through at least part of the robot wrist. The first axis of rotation intersects with the second axis of rotation within a boundary wall of the protection hose in at least one position of the robot wrist.

Intersection of the first and the second axes of rotation within the boundary wall of the protection hose is achieved by making the second wrist part compact in the longitudinal direction of the protection hose, and wide in the radial direction of the same. As a result the protection hose is arranged in a single circular arc in a bent position of the robot wrist, which in its turn results in an improved service life of the protection hose.

According to one embodiment of the invention the protection hose has the same total length in each of a bent and a straight position of the robot wrist. By keeping the total length of the protection hose constant, the service life of the same is further improved.

### BRIEF DESCRIPTION OF THE DRAWINGS

The invention will be explained in greater detail with reference to the accompanying drawings, wherein
- figure 1: shows a cross-section of a robot wrist according to the Prior Art in a straight position,
- figure 2: shows a cross-section of the robot wrist according to the Prior Art in a bent position,
- figure 3: shows a cross-section of a robot wrist according to an embodiment of the invention in a bent position,
- figure 4: shows a cross-section of a robot wrist according to an embodiment of the invention in a straight position, and
- figure 5: shows an exterior of a robot wrist according to an embodiment of the invention.

### DESCRIPTION OF PREFERRED EMBODIMENTS

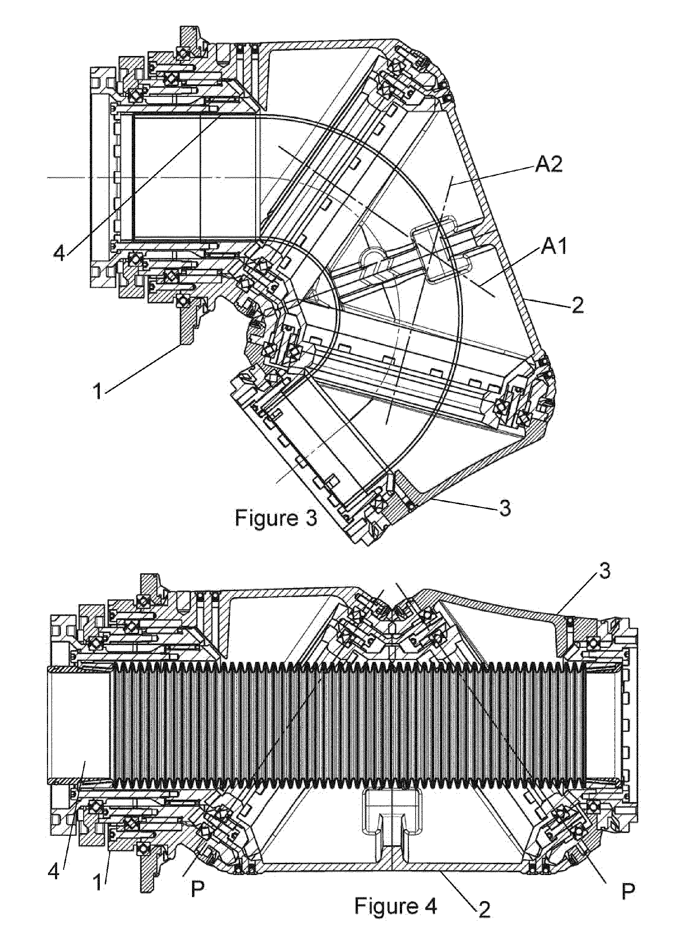

Figure 3 shows schematically a robot wrist according to an embodiment of the invention arranged in a bent position. The figure 3 shows first, second and third wrist parts 1, 2, 3 and a protection hose 4. The second wrist part 2 is rotatable in relation to the first wrist part 1 about a first axis of rotation A₁. The third wrist part 3 is rotatable in relation to the second wrist part 2 about a second axis of rotation A₂. According to the improved inner geometry of the robot wrist there are no obstacles to prevent symmetrical bending of the protection hose 4. It may be seen that the protection hose 4 has a single bend only, forming a single circular arc to accomplish maximum bending while inside the robot wrist in the fully bent position. Furthermore, it may be seen that in the fully bent position of the robot wrist the first axis of rotation A₁ intersects with the second axis of rotation A₂ within a boundary wall of the protection hose 4.

The protection hose 4 (and separate hoses and cables that may be included inside the protection hose 4 but not shown in the figure) shown in Figure 3 have the possibility to bend more freely than in the Prior Art design due principally to a redesigned gearwheel set-up. In the Prior Art design of Figure 2 it is shown how the protection hose 4 has to bend more than once in the existing design, and that the protection hose 4 has to travel or extend over the linear distance X when bending from straight to bent position. The repeated travel and/or extension of the Prior Art design inflicts wear on the protection hose 4. Wear on cables and lines inside the protection hose 4 can also be severe, and this travel and/or extension is eliminated or at least to a great extent minimised by the invention.

Figure 4 shows the same first, second and third wrist parts 1, 2, 3 of the invention shown in Figure 3 but arranged in a straight position. This may be compared to the equivalent Prior Art in Figure 1. The planes of rotation P of the gear members at either end of the second wrist part 2 are indicated by a dashed line. Each plane of rotation P is perpendicular to the respective axis of rotation A₁, A₂. It can be seen that the second wrist part 2 according to the invention is more compact than the equivalent second wrist part 2 of the Prior Art. In other words, the small or apex-like side of the cylindrical second wrist part 2 of the invention is more compact than that of the Prior Art.

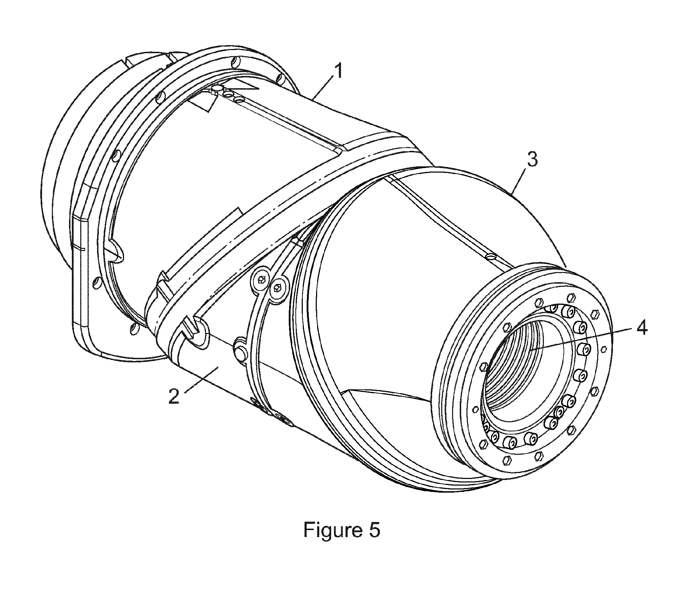

Figure 5 shows an exterior of the robot wrist in which the first, second and third wrist parts 1, 2, 3 are indicated. Inside one end of the robot wrist the protection hose 4 is visible in the form of a corrugated and ring reinforced or spiral type hose.

It should be noted that while the above describes exemplifying embodiments of the invention, there are several variations and modifications which may be made to the disclosed solution without departing from the scope of the present invention as defined in the appended claims.

## Claims

1. A robot wrist comprising:
- a first wrist part (1) configured to be mounted to a robot arm,
- a second wrist part (2) rotatable in relation to the first wrist part (1) about a first axis of rotation (A₁),
- a third wrist part (3) rotatable in relation to the second wrist part (2) about a second axis of rotation (A₂), and
- a protection hose (4) extending through at least part of the robot wrist,
**characterized in that** the first axis of rotation (A₁) intersects with the second axis of rotation (A₂) within a boundary wall of the protection hose (4) in at least one position of the robot wrist.

2. A robot wrist according to claim 1, wherein the protection hose (4) is arranged in a single circular arc in a bent position of the robot wrist.

3. A robot wrist according to any of the preceding claims, wherein the protection hose (4) has the same total length in each of a bent and a straight position of the robot wrist.
